# EUROPEAN PATENT SPECIFICATION

(11) **EP 0 879 757 B1**
(45) Date of publication and mention of the grant of the patent: **29.12.2004**
(21) Application number: 98116229.0
(22) Date of filing: 31.10.1994
(51) Int. Cl.: B62M 23/02

(54) **Electrically assisted pedal operated vehicle**
Pedalfahrzeug mit elektrischem Hilfsmotor
Véhicule à pédal assisté par moteur électrique

(30) Priority: 29.10.1993 JP 29414093; 29.10.1993 JP 29414193; 14.10.1994 JP 27434794
(43) Date of publication of application: 25.11.1998
(62) Divisional of application: 94117218.1
(73) Proprietor: YAMAHA HATSUDOKI KABUSHIKI KAISHA, Iwata-shi Shizuoka-ken, 438 (JP)
(72) Inventor: Ikuma, Katsumi, Iwata-shi, Shizuoka-ken (JP); Nagai, Sueji, Iwata-shi, Shizuoka-ken (JP); Ito, Fumio, Iwata-shi, Shizuoka-ken (JP); Miyata, Shoichiro, Iwata-shi, Shizuoka-ken (JP); Suganuma, Yasuo, Iwata-shi, Shizuoka-ken (JP)
(74) Representative: Grünecker, Kinkeldey, Stockmair & Schwanhäusser Anwaltssozietät

(56) References cited:
- EP-A- 0 517 224
- EP-A- 0 569 954
- EP-A- 0 590 674
- WO-A-93/05977
- PATENT ABSTRACTS OF JAPAN vol. 012, no. 448 (M-768), 24 November 1988 & JP 63 178703 A (HONDA MOTOR CO LTD), 22 July 1988

## Description

The present invention relates to an electrically assisted pedal operated vehicle, in particular a bicycle, comprising a human power drive system and an electrical drive system provided in parallel to each other, wherein control means (68) regulate the output of said electric drive system in accordance with changes in the output of the human power drive system and means for detecting vehicle speed.

Such vehicles, for example, bicycles, which comprise a man power drive system and an assistant electric drive system in parallel to each other such as, for example, shown in EP-A2-0 517 224 or shown in EP-A-0 569 954 or EP-A-0 590 674 (not prepublished and thus prior art only under Article 54(3) EPC), usually control the output of the electric drive system in dependency of the change in the pedal depressing force of the man power drive system. Accordingly, the arrangement alleviates the burden on the human effort by increasing the electric assist motor drive force in proportion to the magnitude of the human power such as pedal depressing force. Thus, the detection of the actual driving conditions of the vehicle, in particular in terms of the pedal depressing force (or under additional consideration of the vehicle speed) the actual driving conditions were detected to derive a target value for the desired electrical power assist.

In an electrically assisted pedal operated vehicle power assist may start when a starting switch has been turned on and a starting signal has been generated, for example by depressing a pedal of the vehicle. However, it may occur that the vehicle does not move even though all the starting conditions are met, for example because the driver pulls the brake of the vehicle or movement of the vehicle is prevented for any other reason, for example by an obstacle on the road.

If under these circumstances the motor assist were continued in a manner similar to normal running an excessive current would continue to flow through the motor thereby accelerating depletion of the battery and putting a large load on the drive system.

Accordingly, the present application aims at improving the starting of an electrically assisted pedal operated vehicle by overcoming the afore-mentioned problems.

This is achieved by an electrically assisted pedal operated vehicle as mentioned initially wherein the control means include run/stop control means comprising means for cancelling the results of a start discrimination when the vehicle speed remains zero for a given period of time after the start intention is discriminated.

By setting said given period to a relatively short time a accelerated depletion of the battery and large loads on the electrical drive system can be avoided.

According to a particular embodiment, the start intention is determined when a pedal force F is equal or greater than a preset force F₀. Preferably, the preset force F₀ is increased by a constant value α each time a non-successful start discrimination is made so that from a certain stage on the repetition of the start discrimination can be interrupted automatically.

For an appropriate control of the electrical power assist the reliability of the vehicle speed sensor is very important. For example, when the electrical connection of the weak speed sensor becomes loose and disconnected during running the sensor output will show an abnormal change in the vehicle speed and this change can be discriminated as sensor anomaly.

However, if the sensor output is zero from the beginning because, for example, of breakage of the connection cord of the vehicle sensor, it is impossible to discriminate whether the vehicle speed is zero or the vehicle speed sensor has failed. Thus, it is an objective of the present invention to provide an electrically assisted pedal operated vehicle as indicated above wherein the amount of motor assist is prevented from changing suddenly when a sudden change of pedal force is detected, thus reducing impacts from being applied to the drive system, improving the riding comfort and preventing the battery of the electric drive system from deteriorating rapidly.

Preferably, an actual driving condition detection means including a human power detection means and a vehicle speed detection means is provided and the control means comprises a fail-safe means checking the function of the vehicle speed detection means.

According to a further particular embodiment of the present invention, the fail-safe circuit of the control means comprises a comparator means issuing a timer start signal for a timer after disciminating the predetermined variation range of the human driving detected is exceeded while simultaneously the vehicle speed sensed does not exceed a certain predetermined value, wherein said timer starts summing up upon receiving said timer start signal and that an alarm means is provided to be triggered by an anomaly discrimination signal when the value is summed up by the timer exceed a predetermined threshold. By means of that preferred embodiment the timer starts if the range of variation of human driving power detected exceeds a predetermined value while simultaneously the vehicle speed is below a given value.

If that condition stays longer than a given period of time the vehicle speed detection means, specifically the vehicle speed sensor, is discriminated as having a fault by means of the above mentioned fail-safe means. Therefore, the faulty condition of the sensor is discriminated even if the output from the vehicle speed sensor remains unchanged before and after the power source was switched on.

Other particular embodiments of the present invention are laid down in the further subclaims.

In the following the present invention is explained in greater detail by means of a preferred embodiment thereof in conjunction with the accompanying drawings, wherein:
Fig. 1, is a bicycle with an electric motor according to an embodiment of the present invention,
Fig. 2, is a block diagram of the power train of the bicycle having a human power drive system and an assisting electrical drive system,
Fig. 3, is a functional block diagram of a control unit of the embodiment,
Fig. 4, is an operational flow chart of a run and stop control function,
Fig. 5, is an operational flow chart of a system protection function and a failure diagnosis function,
Fig. 6, is an operational flow chart of a start torque slide control of the control unit,
Fig. 7, is an operational flow chart of a power assist delimiting function of the control unit,
Fig. 8, is a diagram showing the change in the electrical assist power versus time,
Fig. 9, is an operational flow chart of a stop discrimination control of the control unit,
Fig. 10, is an operational flow chart of a battery low voltage checking function of the control unit,
Fig. 11, is an operational flow chart of a failure diagnosis of the vehicle speed sensor,
Fig. 12a, is a diagram showing the vehicle speed versus time, while,
Fig. 12b, shows a diagram of the pedal force of the operator versus time,
Fig. 13, is a functional block diagram of the failure diagnosis function of the control unit regarding the vehicle speed sensor.

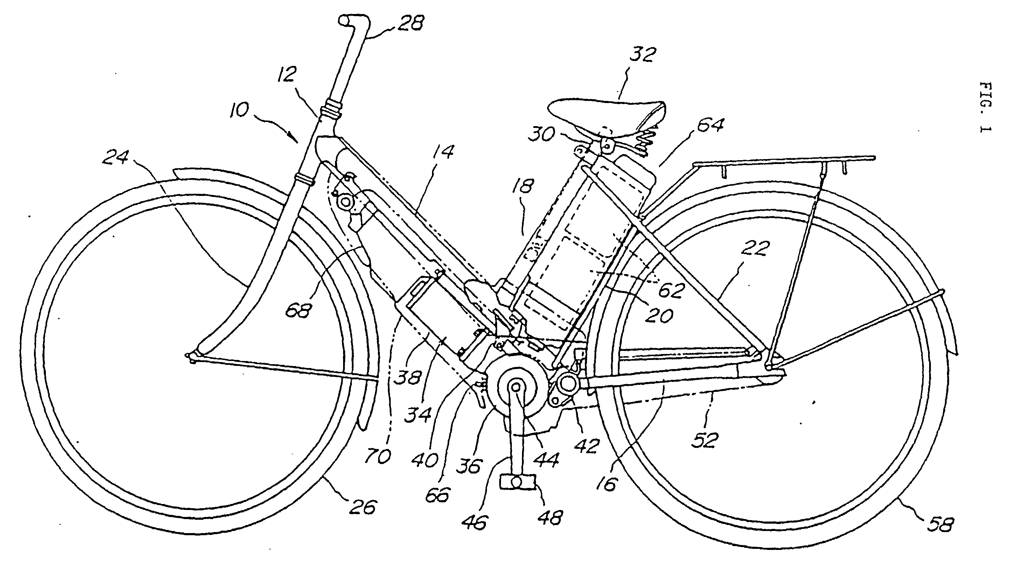

An overall constitution of the vehicle body will be described in reference to FIGs. 1 through 3. FIG. 1 shows a main frame 10 comprising a down tube 14 extending down backward from a head pipe 12, a right and left pair of chain stays 16 (only one is shown) extending backward from the lower end of the down tube 14, a seat tube 18 and a right and left pair of auxiliary stays 20 (only one is shown) rising from the lower portion of the down tube 14 upward, and a right and left pair of back stays 22 (only one is shown) connecting the upper ends of the seat tube 18 and the auxiliary stays 20 to the rear ends of the chain stays 26.

A fork 24 is rotatably supported by the head pipe 12. A front wheel 26 is supported at the lower end of the fork 24. Bar handles 28 are attached to the upper end of the fork 24. A seat post 30 with a saddle 32 attached to the top is inserted from above into the seat tube 18 so as to be adjustbale in height.

A power unit 34 is integrally made up with a bottom bracket case 36 (hereinafter referred to as BB case) and a permanent magnet type dc electric motor 38. The BB case 36 is secured to the rear lower part of the down tube 14 by means of brackets 40 and 42. A crankshaft 44 passes through the BB case 36 of the power unit 34 with cranks 46 attached on both ends. Crank pedals 48 are attached to the cranks 46.

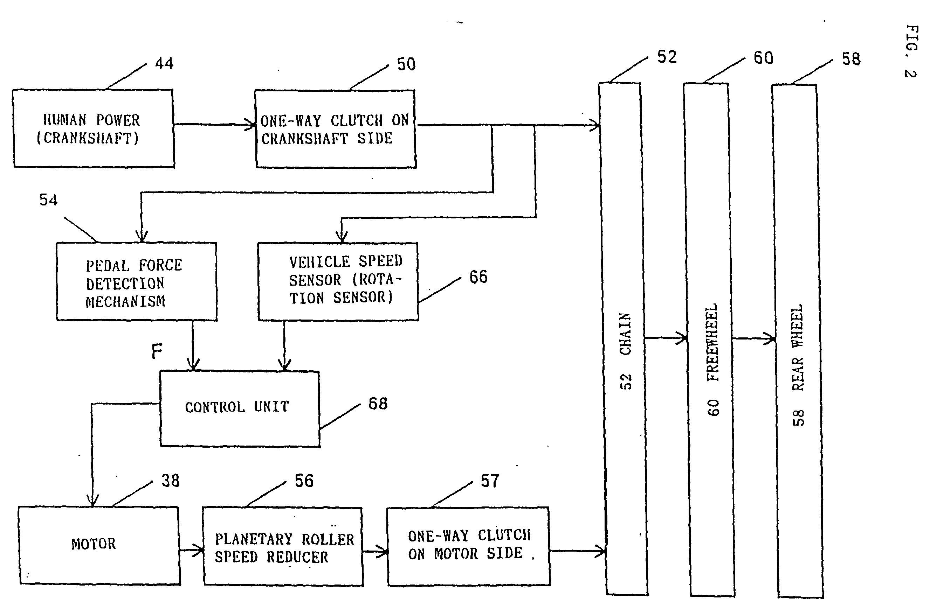

The power unit 34 includes gears and sprockets (not shown) for transmitting the rotation of the crankshaft 44 to a chain 52 through a one-way clutch (FIG. 2) on the crankshaft side. A planetary gear mechanism is interposed between the crankshaft 44 and the chain 52.

The pedal force is inputted to a planetary gear of the planetary gear mechanism and outputted from a ring gear to the chain 52. The pedal force F is detected by detecting the torque applied to a sun gear in the center by means of a pedal force detection mechanism consisting of a potentiometer. Rotation of the motor 38 is transmitted to the chain 52 through a planetary roller type speed reduction mechanism 56 and a one-way clutch 57 on the motor side.

A rear wheel 58 is attached to the rear end of the chain stays 16, namely at the joint between the chain stays 16 and the back stays 22. Here, the hub of the rear wheel 58 constitutes a freewheel 60 to be driven by the chain 52 in the forward direction only. FIG. 1 shows a chargeable battery 62 such as a lead acid battery vertically stacked and held in an elongate battery case 64.

A rotation sensor 66 is attached to the BB case 36 to detect the rotation speed of the sprocket (not shown) on which the chain 52 is wound. The rotation sensor 66 serves also as vehicle speed detection means for detecting the vehicle speed. A control unit 68 is attached to the front lower part of the down tube 14. The control unit 68 and the power unit 34 are covered by a cover 70.

The pedal force F detected by the pedal force detection mechanism consisting of a potentiometer and the vehicle speed S detected by the vehicle speed sensor 66 are inputted to the control unit 68 which controls the motor current according to the pedal force F and the vehicle speed S to produce a motor output or a motor torque T_{M}.

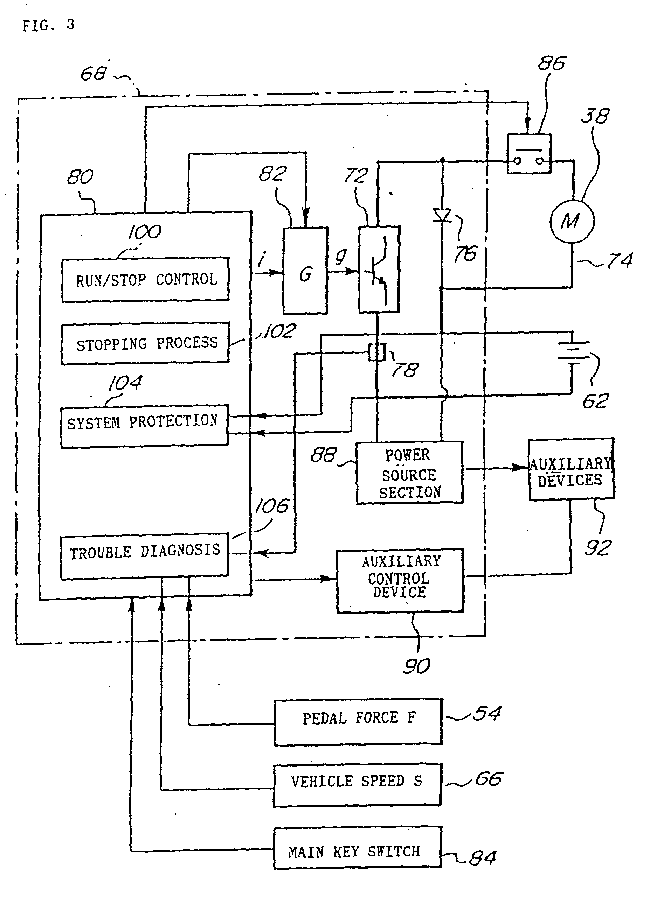

The control unit 68 is constituted as shown in FIG. 3. The motor 38 and the battery 62, together with a switching circuit 72, constitute a closed circuit. This closed circuit is a main circuit 74. The switching circuit 72 is constituted for instance with a MOS-FET. A flywheel diode 76 is connected in parallel to the motor 38. A shunt 78 for detecting current is attached to the main circuit 74.

A CPU 80 outputs a command value (i) for the output (torque) T_{M} of the motor 38 according to the pedal force F and the vehicle speed S. In other words, the CPU issues the command value so that the output (torque) T_{M} of the motor 38 is changed periodically in synchronism with the periodical changes in the pedal force. It may also be arranged that the vehicle speed S is restricted by restricting the motor output T_{M} when a given vehicle speed S is reached.

A gate circuit 82 outputs a gate signal (g) for driving the switching circuit 72 corresponding to the command value (i) for variable duty ratio supplied from the CPU 80. In other words, to increase the motor output T_{M}, the ratio of on time to the total of on time and off time (called a duty ratio) of the command value (i) is increased.

The gate signal (g) issued by the gate circuit 82 according to the command value (i) is sent to a switching element of the switching circuit 72 to selectively turn each switching element on and off.

A main key switch 84 is shown in FIG. 3. When the main switch 84 is turned on, the CPU 80 turns on the main relay 86 intervening in the main circuit 74, and at the same time, brings a power source section 88, an auxiliary device control section 90, the gate circuit 82, and all parts of the control unit 68 into starting state. The power source section 88 produces a power source voltage for the CPU 80 and a drive voltage for the auxiliary devices 92 by stepping down the voltage of the battery 62 for running by means of a switching regulator for instance.

Here, it may also be arranged that another small capacity battery (not shown) is connected to the power source section 88 and charged by current stepped down from the running battery 62. The auxiliary devices 92 includes lamps and meters driven by the power from the power source section 88 according to the command of the auxiliary device control section 90.

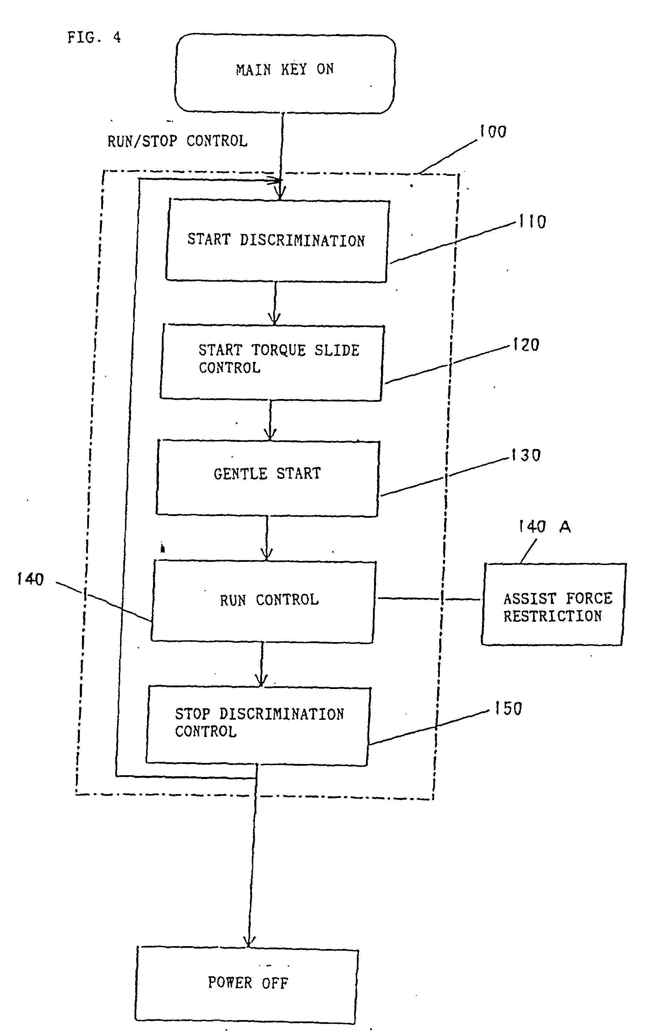

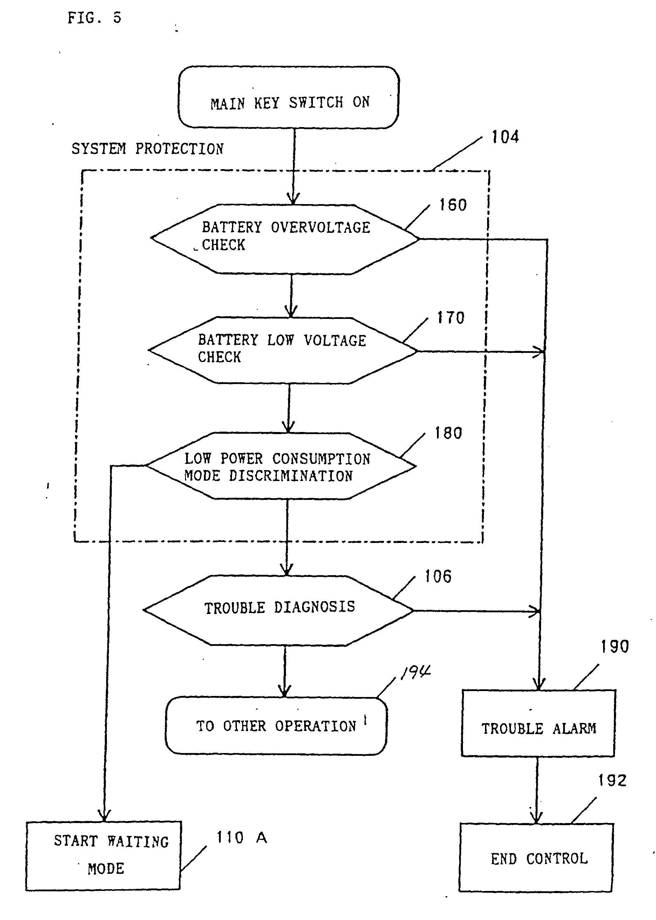

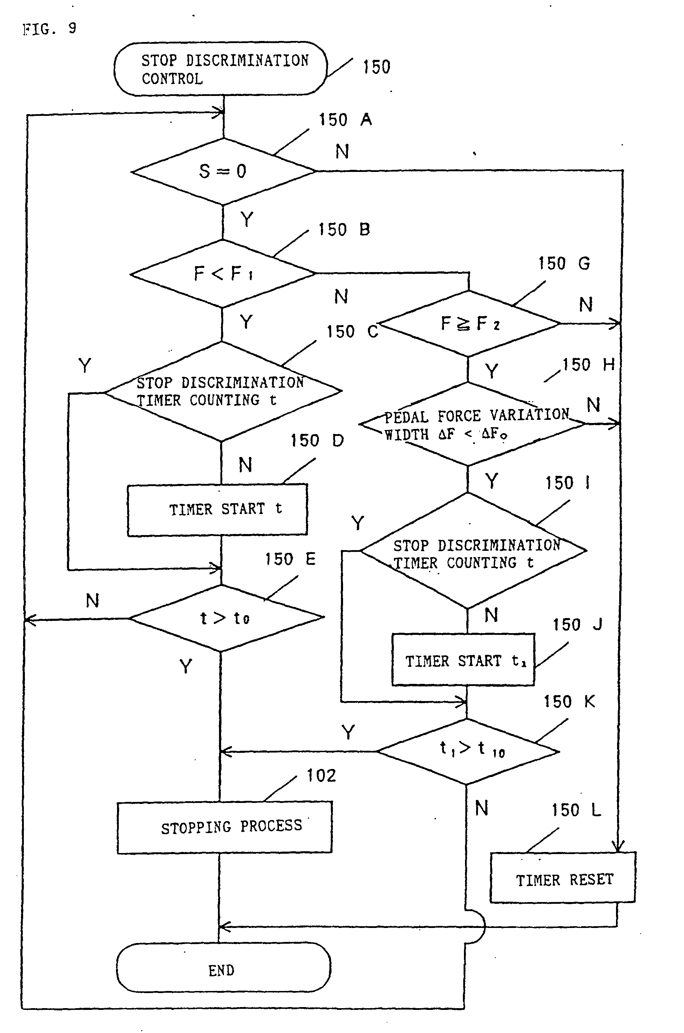

The function of the CPU will be described below in reference to FIGs. 3 through 13. The CPU has various functions operating according to software. These functions are roughly divided into the following four as shown in FIG. 3. They are; a run and stop control function 100, a stop process function 102, a system protection function 104, and a trouble diagnosis function 106. The system protection function 104 and the trouble diagnosis function 106 are repeated at suitable timings while the CPU 80 is performing other processes, and processed for instance about every 10 milliseconds. FIG. 4 is a flow diagram roughly showing the operation of the run and stop control function 100 and the stop process function 102. FIG. 5 is a flow diagram roughly showing the operation of the system protection function 104, and the trouble diagnosis function 106.

The run and stop control function 100 performs various operations from start to stop discrimination according to turning the main key switch 84 on. This is repeated for instance about every 10 milliseconds. The contents of the function 100 will be described below for each function.

First, the start discrimination function 110 will be described. This function 110 discriminates an intention of a start being shown when the pedal force F exceeds a given value Fo (for instance 30 kg), and moves on to the run control state by way of a start torque slide control function 120 which will be described below.

The start torque slide control 120 is for cancelling the result of the start discrimination when the vehicle speed S remains zero for a given period of time (3 seconds for instance) after the start intention is discriminated as shown by the start discriminating function 110. An example of such a case is that a pedal force is applied while brake is applied to prevent starting. If the motor 38 is driven in that case in a similar manner as in normal running, an excessive current will continue to flow in the motor 38 to accelerate depletion of the battery 62 and to put a large load on the drive system. That is the reason to interrupt the start after a given period of time.

When the vehicle remains stopped under the condition of a constant pedal force being applied, as in the case a pedal force is applied under the condition of the front wheel being pressed against a wall, it is not desirable that a motor current flows repeatedly at constant time intervals. In view of this, this embodiment is arranged to increase the given value for discriminating the start (start discrimination pedal force reference value Fₒ) by a constant value α every time the start discrimination is made.

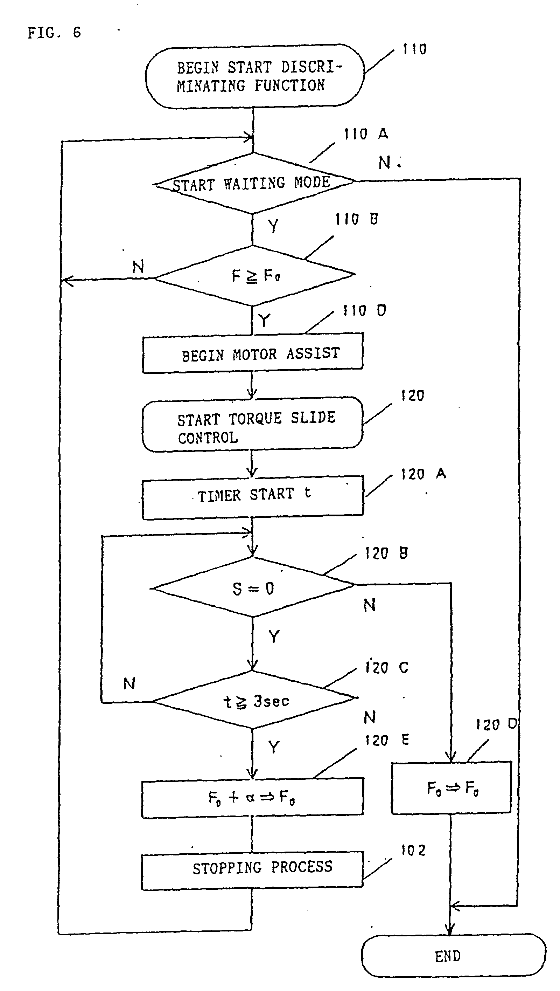

FIG. 6 is a flow diagram of the above. Since this embodiment is arranged so that the start waiting mode is automatically set when the main key switch is turned on while the vehicle is at rest or driven by the human power only, it is discriminated as the start waiting mode in the step 110A. This start waiting mode discriminating step 110A is for discriminating whether or not the current mode is the one waiting for a start. If the mode is waiting for the start, the intention of start is discriminated as present when the pedal force F is equal to or greater than Fₒ (step 110B). If F ≥ Fₒ, the motor assist is started and at the same time the mode is set to the gentle starting mode (step 110D). Next the process proceeds to the start torque slide control 120. In this control 120, first the timer is started (step 120). If the mode is not the start waiting mode, it means that the vehicle is already running and therefore the process bypasses the start discrimination 110 and the start torque slide control 120, and proceeds to the next process of the gentle starting 130.

The vehicle speed S is checked if it is zero or not (step 120B). If S = 0, then the timer is checked if its time count (t) has reached a given value tₒ (for instance 3 seconds) (step 120C). If S is not zero. it is discriminated that actual running has been started, and the start discrimination function is finished without changing the value of Fₒ (step 120D).

If the time t has reached tₒ, it is controlled so that the reference value Fₒ is increased to Fₒ + α (step 120E), and to stop the motor assist. The process returns tₒ the start waiting mode (step 102). If the time t has not reached tₒ, the process returns to the step 120B to check the vehicle speed S if it is zero or not. If F ≥Fₒ while the pedal force remaining applied, it is again discriminated as the start being intended (step 110B), and the motor assist is started (step 110D). After this operation is repeated for (n) times and if F ≤ Fₒ + nα, the motor assist is not made any more (step 110B).

If the assist amount (hereinafter referred to as target assist amount) as calculated is suddenly given when the motor assist is started, a rush current flows to the motor like a big shock. Therefore, a gentle start function 130 is provided to smoothly increase the assist amount given as an actual command value (hereinafter referred to as actual assist amount). Namely, 10% of the actual assist amount is added to the actual assist amount at constant time intervals (for instance 0.015 seconds) and, when the target assist amount is reached, the process sets to the running mode, and proceeds to the run control 140.

In the run control 140 for ordinary running, an optimum assist amount is calculated in consideration of the vehicle speed S, pedal force F, power source voltage, and motor current, and the assist amount is renewed at constant time intervals (for instance 0.01 seconds). In that case, the amount of change from the previous assist amount is restricted to provide a smooth assist feeling. Namely as shown in FIG. 4, an assist power restricting function (step 140A) is provided.

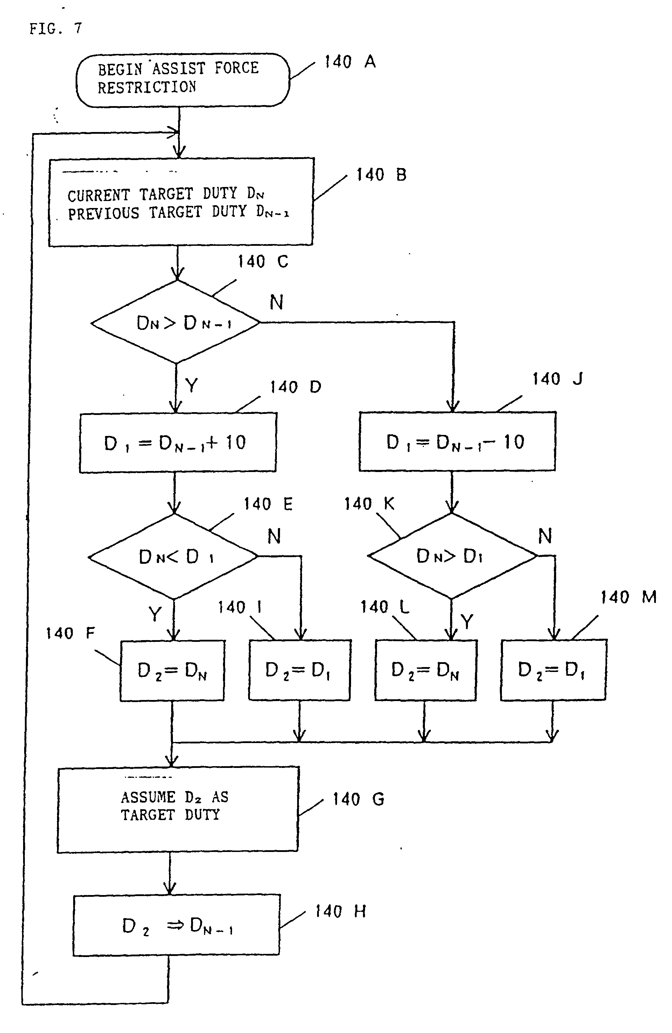

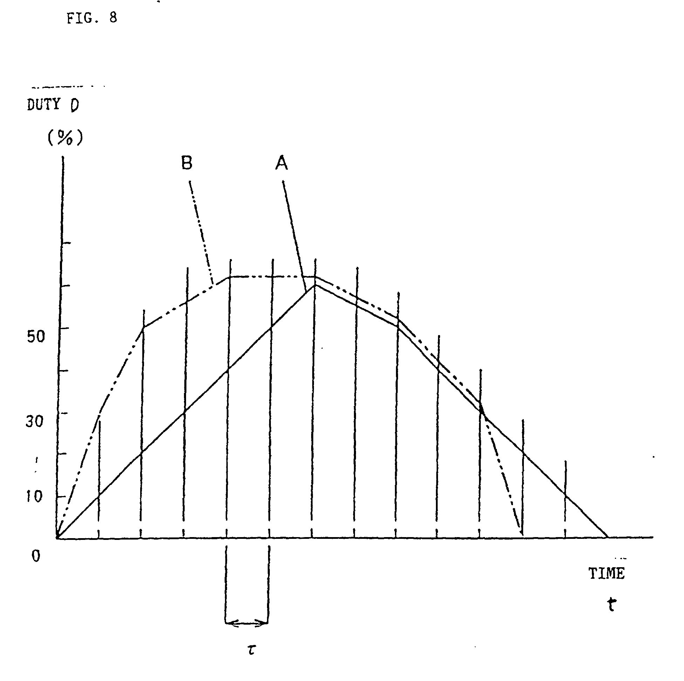

FIG. 7 is an operation flow chart of the assist power restricting function 140A and FIG. 8 is a diagram showing an example of changes in the assist power with time. Since this embodiment controls the motor current by PWM, when the motor current is expressed by the duty D%, control is performed so that target duty D (equivalent to the target assist amount; duty is equivalent to assist amount in the following description) does not change in excess of a given value (for instance 10%).

Referring to FIG. 7, a current duty D_{N} and a target duty D_{N-1} preceding by a time τ are stored (step 140B), and if the duty D is increasing (step 140C), the duty D_{N-1} is increased by 10% and the result is deemed as D1 (step 140D). If D_{N} < D₁, increase in D_{N} is not greater than 10% (step 140E) and it is assumed as D₂ = D_{N} (step 140E) and the D₂ is deemed as the target duty to control the motor output (step 140G). Then assuming the D₂ as the previous D_{N-1}, the process returns to the step 140B.

If D_{N} is equal to or greater than D₁ in the step 140D, it means that the increase in the target duty is 10% or more. Then it is made that D₂ = D₁ (step 140I) and control is performed with the D₂ as a target duty.

If the target duty is decreasing (step 140C), the previous target duty D_{N-1} is reduced by 10% and the result is used as D₁ (step 140J). If D_{N} > D₁ (step 140K), the decrease is less than 10%. Therefore, D_{N} is used as the target duty D₂ (step 140L). If D_{N} ≤ D₁, the decrease is not less than 10%, and the D₁ is used as a target duty D₂ (step 140M).

The above process is shown in FIG. 8 with solid lines A. The phantom lines B show changes in the duty D when control by the assist power restricting means 140A is not performed. In this way, the increase and decrease in the motor current is smoothed by the use of the control 140A. As a result, ride feeling is improved and shocks to the drive system are reduced.

At the time of starting in particular, current is restricted to a moderated value even at low motor speeds to prevent the battery from deteriorating rapidly. This run control also restricts the motor assist ratio at high speeds. To do that, the assist ratio may be set to a small value on map defining the assist ratio relative to the vehicle speed S and the pedal force F.

In this embodiment, intention of a stopis discriminated by the use of the pedal force F and the vehicle speed S without using a brake switch.

First, when the vehicle speed is zero (step 150A), if the pedal force is less than a given value F₁ (corresponding to 12 kg, or a torque of about 2 kg-m, for instance) (step 150B), the timer is started (step 150C). If the timer is already counting, the counting is allowed to continue (step 150D). When the accumulated value t of the timer reaches a given value tₒ (1 second for instance) (step 150E), the process proceeds to a stop process to make the motor output zero (step 102F).

When it is not F < F₁ (step 150B) and F is not less than F₂ (F₂ is greater than F₁, 30 kg for instance) (step 150G), other timer is started (step 150I) when variation width ΔF of the pedal force F is not greater than a given value ΔFₒ (12 kg for instance) (step 150H). If the timer is already counting, the counting is allowed to continue (step 150J). When the accumulated value t₁ continues for a give value t₁₀ (2 seconds for instance), intention of stop is discriminated as present (step 150J). The timer is reset when the vehicle speed S is not zero (step 150A), or the above conditions are not met (step 150L), and the process returns to the step 10. At this time, the mode is retained as it is.

When the intention of a stop is discriminated as present as described above, the process proceeds to a stop process (step 102) to decrease the motor output gradually, and prepares for the next start, or wait for the next input of the pedal force F by setting the process to the start waiting mode. When there is no input signal from outside such as the pedal force F and the vehicle speed S for more than a given period of time, the process proceeds to an energy saving mode. For instance, the gate circuit 82, main relay 86, power source section 88 are deenergized, and the CPU 80 stops operating except for the function of discriminating the presence of external inputs.

The system protection function 104 will be described below. As shown in FIG. 5, this function consists of a battery overvoltage checking function 160, a battery low voltage checking function 170, and a low power consumption mode discrimination function 180.

The battery overvoltage checking 160 is for protecting the system as when the battery is replaced with one of a higher voltage by modification. Namely, when the main key switch 84 (FIG. 3) is turned on, the battery voltage is checked if it is higher than a given value. If higher, the control is stopped to restrict the running to proceed to the energy saving mode. In this way, running during charging is securely prevented. It is desirable to enhance safety so that the running is disabled unless the main key switch 84 is turned off, even if the battery voltage recovers normal level under that condition.

The battery low voltage checking function 170 is for protecting the battery from discharging excessively when the battery voltage lowers excessively. The battery voltage, even if it lowers excessively during running, recovers and rises when the discharge current is shut off by stopping the control. Therefore, the control becomes possible again. However, the battery deteriorates because of excessive discharge. Therefore, it is preferable to check the voltage without load immediately after turning on the main key switch 84, and to issue an alarm if the voltage is lower than a preset value.

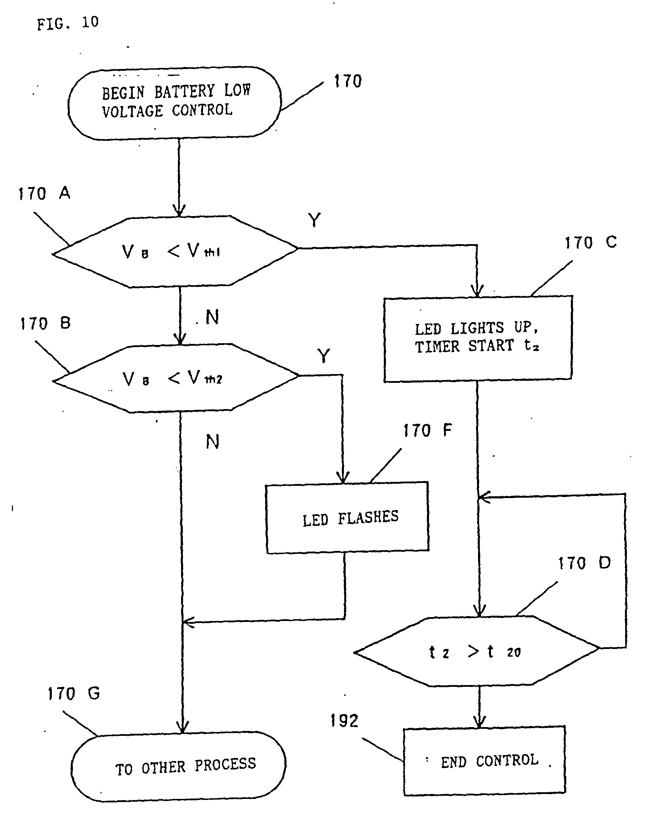

The battery low voltage checking function 170 may also be as shown in FIG. 10. Namely the battery voltage V_{B} is compared with two threshold values Vₜₕ₁ and Vₜₕ₂ (Vₜₕ₁ < Vₜₕ₂) (steps 170A, 170B). If V_{B} is not greater than Vₜₕ₁, an LED is lit up and the timer is started (step 170C). When the timer count reaches an accumulated time t₂₀ (for instance 5 seconds) (step 170D), entire control is stopped (step 192).

If V_{B} is between Vₜₕ₁ and Vₜₕ₂ (steps 170A, 170B) the LED flashes as an alarm (step 170F). If V_{B} is not less than Vₜₕ₂, there is no problem with the battery voltage and therefore other control is performed (step 170G).

As described above, when the voltage V_{B} is not greater than Vₜₕ₁, the vehicle is prevented from stopping suddenly by arranging that the control is stopped not immediately but after a given period of time during which the LED is lit up. For instance, it is conceivable that when the vehicle is started at an intersection, the voltage lowers and the LED lights up before finishing crossing the intersection. Even in such a case, running can be continued within the timer set period of t₂₀ to finish crossing the intersection.

The low power consumption mode discriminating function 180 is for discriminating the energy saving mode described before. When the vehicle is at rest (S = 0) and the input signal for the vehicle speed S is not made continuously for more than a given period of time (5 minutes for instance), the process is brought to the energy saving mode. In this mode, as described before, the gate circuit 82, main relay 86, power source section 88 are deenergized, and the CPU 80 stops operating except for the function of discriminating the presence of external inputs.

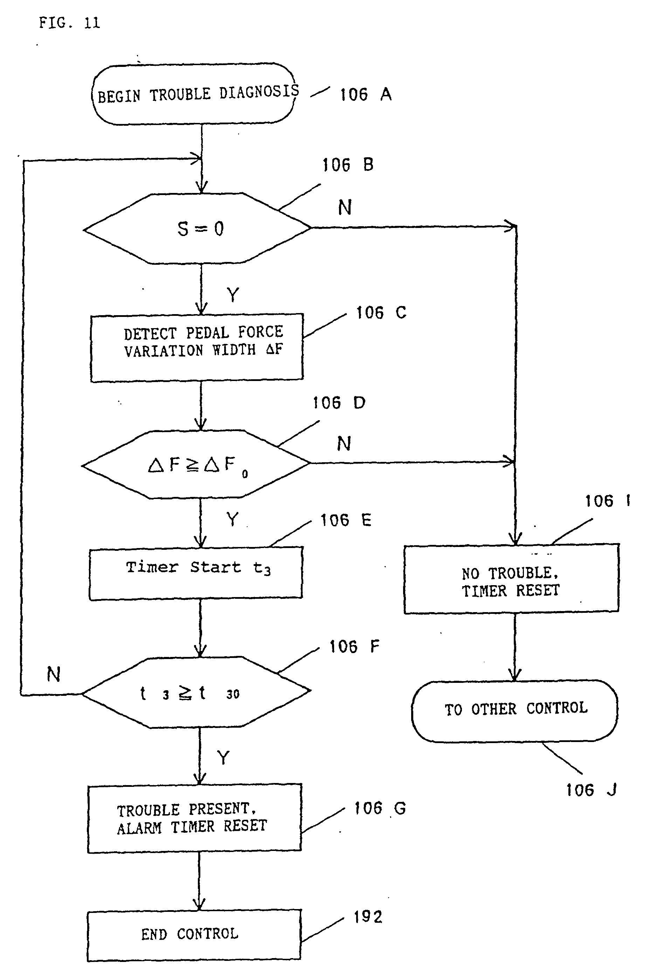

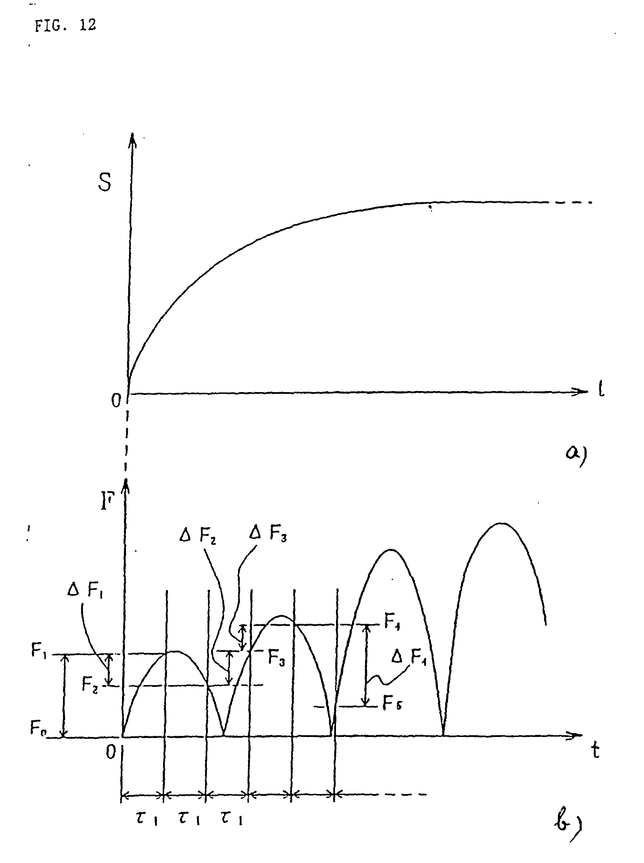

The fail-safe means providing a trouble diagnosis function 106 searches for various troubles and failures and if any trouble exists an alarm is issued (step 190) in a similar manner as the steps 160 and 170 to stop the control (step 192). In the control stop step 192, the main relay 86 is turned off, and the CPU stops all of its functions except for the alarm process and the low power consumption mode discriminating function. Fig. 11 is a flow chart showing the trouble detecting function of the vehicle speed sensor 66 as an example of the trouble diagnosis function 106, and Fig. 12 is an explanatory diagram of the operation.

The failure detection of the vehicle speed sensor 66 is the discrimination of the absence of output of the vehicle speed sensor 66 before and after starting. In other words, when this process starts (step 106A) and the output of the vehicle speed sensor (vehicle speed S) is zero (step 106B), the variation width ΔF of the pedal force F is detected (step 106C). The variation width ΔF, as shown in FIG. 12, is obtained from the differences between the pedal forces Fₙ and Fₙ₊₁ or ΔFₙ = Fₙ₊₁ - Fₙ detected at constant time intervals τ₁. The time τ₁ is set to 0.5 seconds for instance.

The difference ΔFₙ is compared with a constant value ΔFₒ (step 106D). If ΔFₙ ≥ ΔFₒ, the timer is started (step 106E) and when its accumulated value t₃ reaches a given value t₃₀, the vehicle speed sensor 66 is discriminated as having a trouble (step 106G). Then an alarm is issued and the timer is reset. The control is stopped (step 192). When the vehicle speed S becomes not zero before the accumulated timer count t₃ reaches t₃₀ (step 106B), or ΔF < ΔFₒ (step 106D), it is discriminated as absence of trouble, and the timer is reset (step 106I), and the process proceeds to other control (step 106J).

As described above, even if the vehicle speed S is zero, the trouble in the vehicle sensor 66 is discriminated as present when the variation width ΔF is greater than a given value. Therefore, the trouble is detected even if the output from the vehicle speed sensor 66 is not present because of wire breakage or the like. If no trouble is detected after finishing the trouble diagnosis 106 as described above, the process proceeds to other normal control (step 194, FIG. 5).

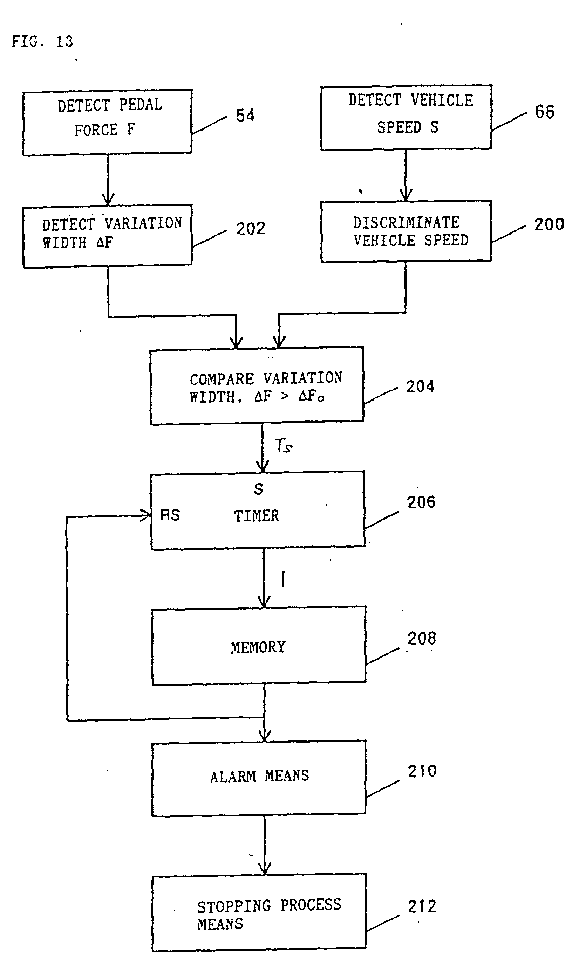

The trouble diagnosis function 106A ofthe vehicle speed sensor 66 may be constituted as shown in the block diagram of FIG. 13. Namely the vehicle speed S detected by the vehicle speed detection means consisting of the vehicle speed sensor 66 is discriminated if the S = 0 or not by a vehicle speed dicriminacion means 200. The numeral 202 denotes means for detecting variation width of the pedal force F. The variation width ΔF obtained here is inputted to a variation width comparison means 204 when the vehicle speed S is zero, compared with a given value ΔFₒ. When ΔF > ΔFₒ, a timer start signal Tₒ is issued.

A timer 206 is reset by the start signal Tₛ and starts counting time. The timer 206 issues a trouble discrimination signal I when the accumulated time count reaches a given time t₃₀. The trouble discrimination signal I is stored in a buffer memory 208 and at the same time causes an alarm means 210 to issue an alarm, and causes a stop process means 212 to stop the control. It also resets the timer 206.

While the target assist amount calculated according to the pedal force F or to both pedal force and vehicle speed is represented by the duty in the assist force restricting means 140A of this embodiment and it is arranged that the amount of change at every time interval is restricted within 10%, this invention is not limited to this embodiment. It may also be arranged that the amount of change in the target assist amount is restricted within a given rate of the motor drive torque, or the amount of change in the duty or torque is set within a numerically determined range.

In this embodiment, the variation width is taken as the difference ΔF between two consecutive detected values of the pedal force F detected at constant time intervals τ₁ when the trouble of the vehicle speed sensor 66 is to be detected. However, this invention is not limited to this embodiment. For instance, the variation width may also be taken as the difference between maximum and minimum values of the pedal force within a variation period. This invention may also be applied to vehicles other than the bicycle, such as a wheelchair and a hand-pushed cart. In that case, the human drive power is the manual force.

## Claims

1. Electrically assisted pedal operated vehicle comprising
a human power drive system and an electrical drive system provided in parallel to each other, wherein control means (68) regulate the output of said electric drive system in accordance with changes in the output of the human power drive system, and means for determining vehicle speed (S),
**characterized in that**
the control means (68) include run/stop control means (100) comprising means (120) for cancelling the results of a start discrimination when the vehicle speed (S) remains zero for a given period of time (t₀) after the start intention is discriminated.

2. Electrically assisted pedal operated vehicle according to claim 1, **characterized in that** the intention of start is discriminated when a pedal force F is equal or greater than a preset force F₀ (110B).

3. Electrically assisted pedal operated vehicle according to claim 1 or 2, **characterized in that** motor assist is started when the intention of start has been detected (110B).

4. Electrically assisted pedal operated vehicle according to one of claims 1 to 3, **characterized in that** a preset force F₀ is increased by a constant value α each time an non-successful start discrimination is made.

5. Electrically assisted pedal operated vehicle according to one of claims 1 to 4, **characterized in that** it comprises
means for determining whether or not the vehicle speed (S) is zero (120B); a timer (120A,C) for starting and increasing a time count t;
wherein after the starting of the time count t and after each increase of the time count t the vehicle speed (S) is checked,
whereupon if the vehicle speed (S) is not zero it is discriminated that the actual running has started, and if the vehicle speed (S) is found to be zero it is determined whether or not the time count t has reached said given period of time t₀.

6. Electrically assisted pedal operated vehicle according to one of claims 1 to 5, wherein if the time count t has reached said given period of time t₀ the preset force F₀ is increased by a constant value α, the motor assist is stopped (102), and the start waiting mode is resumed.

7. Electrically assisted pedal operated vehicle according to one of claims 1 to 6, **characterized in that** the repetition of start discrimination is limited to a predetermined number n.

8. Electrically assisted pedal operated vehicle according to one of claims 1 to 7, **characterized in that** it comprises means for repeatedly checking whether or not a starting switch (84) is turned on.

9. Electrically assisted pedal operated vehicle according to one of claims 1 to 8, **characterized in that** it comprises an actual driving condition detecting means including a human power detection means and said vehicle speed detection means, and that said control means (68) comprises a fail-safe circuit (106) for checking the function of the vehicle speed detection means (66).

10. Electrically assisted pedal operated vehicle according to claim 9, **characterized in that** the fail safe circuit (106) comprises a comparator means issuing a timer start signal for a timer (206) after discriminating that a predetermined variation range of the human driving power is exceeded under a condition that the vehicle speed detected by the vehicle speed detection means (66) does not exceed a predetermined value, said timer being started by said timer start signal and that an alarm means (210) is provided by a trouble discrimination signal I when the value accumulated by the timer exceeds a predetermined value.

## Patentansprüche

1. Elektrisch unterstütztes, pedalbetätigtes Fahrzeug, das ein Menschenkraft- Antriebssystem und ein elektrisches Antriebssystem aufweist, parallel zueinander vorgesehen, wobei eine Steuerungseinrichtung (68) die Ausgangsleistung des elektrischen Antriebssystems in Übereinstimmung mit Veränderungen in der Ausgangsleistung des Menschenkraft- Antriebssystems reguliert, und Mitteln zum Bestimmen der Fahrzeuggeschwindigkeit (S),
**dadurch gekennzeichnet, dass**
die Steuerungseinrichtung (68) eine Lauf- / Stopp- Steuereinrichtung (100) mit einer Einrichtung (120) zum Aufheben der Ergebnisse einer Startunterscheidung, wenn die Fahrzeuggeschwindigkeit (S) für einen gegebenen Zeitraum (t₀) Null bleibt, nachdem die Startabsicht festgestellt ist.

2. Elektrisch unterstütztes, pedalbetätigtes Fahrzeug nach Anspruch 1, **dadurch gekennzeichnet, dass** die Startabsicht festgestellt wird, wenn eine Pedalkraft F gleich oder größer als eine voreingestellte Kraft F₀ (110B) ist.

3. Elektrisch unterstütztes, pedalbetätigtes Fahrzeug nach Anspruch 1 oder 2, **dadurch gekennzeichnet, dass** die Motorunterstützung gestartet wird, wenn die Startabsicht erfasst worden ist (110B).

4. Elektrisch unterstütztes, pedalbetätigtes Fahrzeug nach einem der Ansprüche 1 bis 3, **dadurch gekennzeichnet, dass** eine voreingestellte Kraft F₀ um einen konstanten Wert α jedes Mal erhöht wird, wenn eine nicht- erfolgreiche Startfeststellung vorgenommen wird.

5. Elektrisch unterstütztes, pedalbetätigtes Fahrzeug nach einem der Ansprüche 1 bis 4, **dadurch gekennzeichnet, dass** es aufweist
eine Einrichtung zum Unterscheiden, ob die Fahrzeuggeschwindigkeit (S) Null ist (120B), oder nicht;
einen Zeitgeber (120A, C) zum Starten und Erhöhen einer Zeitzählung t;
wobei nach dem Starten der Zeitzählung t und nach jeder Erhöhung der Zeitzählung t die Fahrzeuggeschwindigkeit (S) geprüft wird,
wobei dann, wenn die Fahrzeuggeschwindigkeit (S) nicht Null ist, festgestellt wird, dass die tatsächliche Fahrt gestartet worden ist, und wenn die Fahrzeuggeschwindigkeit (S) zu Null festgestellt wird, bestimmt wird, ob die Zeitzählung t die gegebene Zeitdauer der Zeit t₀ erreicht hat, oder nicht.

6. Elektrisch unterstütztes, pedalbetätigtes Fahrzeug nach einem der Ansprüche 1 bis 5, wobei, wenn die Zeitzählung t die gegebene Zeitdauer der Zeit t₀ erreicht hat, die voreingestellte Kraft um einen konstanten Wert α erhöht wird, die Motorunterstützung (102) gestoppt wird und der Startwartemodus wieder aufgenommen wird.

7. Elektrisch unterstütztes, pedalbetätigtes Fahrzeug nach einem der Ansprüche 1 bis 6, **dadurch gekennzeichnet, dass** die Wiederholung der Startfeststellung auf eine vorbestimmte Anzahl n begrenzt ist.

8. Elektrisch unterstütztes, pedalbetätigtes Fahrzeug nach einem der Ansprüche 1 bis 7, **dadurch gekennzeichnet, dass** es eine Einrichtung zum wiederholten Prüfen aufweist, ob, ein Startschafter (84) eingeschaltet ist, oder nicht.

9. Elektrisch unterstütztes, pedalbetätigtes Fahrzeug nach einem der Ansprüche 1 bis 8, **dadurch gekennzeichnet, dass** es eine tatsächliche Antriebsbedingung-Erfassungseinrichtung aufweist, die eine Menschenkraft- Erfassungseinrichtung und die Fahrzeuggeschwindigkeits- Erfassungseinrichtung enthält, und das die Steuerungseinrichtung (68) einen ausfallsichere Schaltung (106) für das Überprüfen der Funktion der Fahrzeuggeschwindigkeits- Erfassungseinrichtung (66) enthält.

10. Elektrisch unterstütztes, pedalbetätigtes Fahrzeug nach Anspruch 9, **dadurch gekennzeichnet, dass** der ausfallsichere Schaltkreis (106) eine Vergleichseinrichtung aufweist, die ein Zeitgeberstartsignal für einen Zeitgeber (206) ausgibt nachdem festgestellt wurde, dass ein vorbestimmter Veränderungsbereich der Menschenantriebskraft überschritten ist, unter einer Bedingung, dass die Fahrzeuggeschwindigkeit, erfasst durch die Fahrzeuggeschwindigkeits- Erfassungseinrichtung (66), einen vorbestimmten Wert nicht überschreitet, wobei der Zeitgeber durch das Zeitgeberstartsignal gestartet wird und dass eine Alarmeinrichtung (210) vorgesehen ist, um ein Störungs- Feststellungssignal I auszugeben, wenn der durch den Zeitgeber aufgespeicherte Wert einen vorbestimmten Wert überschreitet.

## Revendications

1. Véhicule à pédale assisté électriquement, comprenant :
un système d'entraînement par puissance humaine et un système d'entraînement électrique prévus parallèlement entre eux, dans lequel des moyens de commande (68) régulent un signal de sortie dudit système d'entraînement électrique conformément aux changements de sortie du système d'entraînement par puissance humaine et des moyens pour déterminer la vitesse du véhicule (S),
**caractérisé en ce que** les moyens de commande (68) comprennent des moyens de commande de marche/arrêt (100) comprenant des moyens (120) pour annuler les résultats d'une discrimination de démarrage lorsque la vitesse du véhicule (S) reste nulle pendant une période de temps donnée (t₀) après que l'intention de démarrage a été discriminée.

2. Véhicule à pédale assisté électriquement selon la revendication 1, **caractérisé en ce que** l'intention de démarrage est discriminée lorsqu'une force de pédale f est égale ou supérieure à une force prédéterminée Fₒ (110B).

3. Véhicule à pédale assisté électriquement selon la revendication 1 ou 2, **caractérisé en ce que** l'assistance de moteur est démarrée lorsque l'intention de démarrage a été détectée (110B).

4. Véhicule à pédale assisté électriquement selon l'une des revendications 1 à 3, **caractérisé en ce qu'**une force prédéterminée F ₀ est augmentée d'une valeur constante α chaque fois qu'une discrimination de démarrage non réussie est effectuée.

5. Véhicule à pédale assisté électriquement selon l'une des revendications 1 à 4, **caractérisé en ce qu'**il comprend :
des moyens pour déterminer si oui on non la vitesse du véhicule (S) est nulle (120B) ;
une horloge (120A, C) pour démarrer et augmenter un comptage t ;
dans lequel après le démarrage du comptage t et après chaque augmentation du comptage t la vitesse du véhicule (S) est vérifiée,
après quoi si la vitesse du véhicule (S) n'est pas nulle le démarrage de la marche en cours est discriminé, et si la vitesse du véhicule (S) s'avère nulle, on détermine si le comptage t a atteint ladite période de temps donnée t₀.

6. Véhicule à pédale assisté électriquement selon l'une des revendications 1 à 5, dans lequel si le comptage t a atteint ladite période de temps donnée t ₀, la force prédéterminée F ₀ est augmentée d'une valeur constante α, l'assistance de moteur est interrompue (102), et le mode d'attente de démarrage est repris.

7. Véhicule à pédale assisté électriquement selon l'une des revendications 1 à 6, **caractérisé en ce que** la répétition de la discrimination de démarrage est limitée à un nombre prédéterminé n.

8. Véhicule à pédale assisté électriquement selon l'une des revendications 1 à 7, **caractérisé en ce qu'**il comprend des moyens pour vérifier de manière répétée si un commutateur de démarrage (84) est allumé.

9. Véhicule à pédale assisté électriquement selon l'une des revendications 1 à 8, **caractérisé en ce qu'**il comprend des moyens de détection de l'état de conduite en cours comprenant des moyens de détection de puissance humaine et lesdits moyens de détection de vitesse du véhicule, et **en ce que** lesdits moyens de commande (68) comprennent un circuit de sécurité intégrée (106) pour vérifier le fonctionnement des moyens de détection de la vitesse du véhicule (66).

10. Véhicule à pédale assisté électriquement selon la revendication 9, **caractérisé en ce que** le circuit de sécurité intégrée (106) comprend des moyens formant comparateur délivrant un signal de démarrage d'horloge pour une horloge (206) après avoir discriminé le fait qu'une plage de variation prédéterminée de la puissance d'entraînement humaine est dépassée à la condition que la vitesse du véhicule détectée par les moyens de détection de la vitesse du véhicule (66) ne dépasse pas une valeur prédéterminée, ladite horloge étant démarrée par ledit signal de démarrage d'horloge et que des moyens d'alarme (210) soient fournis par un signal de discrimination de panne I lorsque la valeur accumulée par l'horloge dépasse une valeur prédéterminée.
